# EUROPÄISCHE PATENTANMELDUNG

(11) **EP 4 170 116 A1**
(43) Veröffentlichungstag der Anmeldung: **26.04.2023**
(21) Anmeldenummer: 22203438.1
(22) Anmeldetag: 25.10.2022
(51) Int. Cl.: E05C 3/04, E05B 17/00, E05B 13/00, B60J 7/19, B60J 7/16

(54) **AUFSTELLDACHVERRIEGELUNG**

(30) Priorität: 25.10.2021 DE 102021127699; 25.10.2021 DE 202021105827 U
(71) Anmelder: EMKA BESCHLAGTEILE GmbH & Co. KG, 42551 Velbert (DE)
(72) Erfinder: Wardi, Florian, 42327 Wuppertal (DE)
(74) Vertreter: Feder Walter Ebert

(57) **Zusammenfassung**

Die Erfindung betrifft eine Aufstelldachverriegelung (10) zur Verriegelung eines Aufstelldaches (20) eines Fahrzeugs (30) in dessen geschlossener Position, mit einem um eine Verriegelungsachse (A) zwischen einer Verriegelungsstellung (V) und einer Entriegelungsstellung (E) hin und her drehbaren Verriegelungselement (1), und einem Gegenverriegelungselement (2) welches von dem Verriegelungselement (1) zur Verriegelung des Aufstelldaches (20) hintergreifbar ist, wobei das Verriegelungselement (1) derart ausgestaltet ist, dass es das Gegenverriegelungselement (2) in einer Fangstellung (F) fangen und dieses bei einer Drehung in die Verriegelungsstellung (V) in Richtung der Verriegelungsachse (A) bewegen kann.

## Beschreibung

Die Erfindung betrifft eine Aufstelldachverriegelung zur Verriegelung eines Aufstelldaches eines Fahrzeugs in dessen geschlossener Position, mit einem um eine Verriegelungsachse zwischen einer Verriegelungsstellung und einer Entriegelungsstellung hin und her drehbaren Verriegelungselement, und einem Gegenverriegelungselement, welches von dem Verriegelungselement zur Verriegelung des Aufstelldaches hintergreifbar ist. Weiterhin betrifft die Erfindung eine Aufstelldachverriegelungsvorrichtung sowie ein Fahrzeug mit einer Aufstelldachverriegelung.

Aufstelldächer sind insbesondere aus dem Bereich der Reisemobile, Campingbusse, Wohnwagen oder auch aus dem Bereich der SUVs, Geländefahrzeuge und LKWs bekannt und sorgen für eine Vergrößerung der Stehhöhe im Fahrzeug bzw. insgesamt für eine Vergrößerung des Fahrzeugsinnenraums und damit beispielsweise für die Bereitstellung zusätzlicher Schlafplätze. Oftmals wird dabei das Aufstelldach über eine Schwenkachse derart mit dem Fahrzeug bzw. mit einem das Aufstelldach umgebenden Rahmen verbunden, dass dieses um die Schwenkachse nach oben geschwenkt werden kann, wodurch sich der Fahrzeuginnenraum vergrößern lässt. Daneben sind auch Aufstelldächer bekannt, die sich nicht verschwenken lassen, sondern die sich, beispielsweise über eine Scherenarmkonstruktion, insgesamt in vertikaler Richtung nach oben bewegen lassen und die daher auch als Hubdächer bezeichnet werden. Auch Aufstelldächer, die eine kombinierte Hub-/Schwenkbewegung ermöglichen, sind bereits bekannt.

Aufstelldächer können in der Regel nur im Fahrzeugstillstand aufgestellt und verwendet werden, müssen jedoch vor der Fahrt zunächst eingeklappt und in die geschlossene Position verbracht werden. Damit die Aufstelldächer bei der Fahrt zuverlässig in der geschlossenen Position verbleiben und nicht aus Versehen aufspringen oder klappern, ist es bekannt, Aufstelldachverriegelungen einzusetzen, die eine Relativbewegung des Aufstelldaches gegenüber dem Fahrzeug in der geschlossen Position verhindern. Aufstelldachverriegelungen bestehen dafür oftmals aus zwei Elementen, nämlich einem Verriegelungselement und einem Gegenverriegelungselement, wobei das Verriegelungselement zumeist an der Innenseite des Aufstelldaches und das Gegenverriegelungselement im Dachbereich des Fahrzeugs angeordnet ist. Wenn das Aufstelldach geschlossen ist, kann dann das Verriegelungselement in oder hinter das Gegenverriegelungselement greifen und das Aufstelldach somit in dessen geschlossener Stellung sichern. Im einfachsten Fall kann es sich bei dem Verriegelungselement beispielsweise um einen Haken handeln, der in ein Gegenverriegelungselement nach Art einer Öse eingeschwenkt werden kann.

Eine solche zumeist konstruktiv sehr einfache Aufstelldachverriegelung hat sich in der Praxis jedoch als nachteilig erwiesen.

Denn zwischen dem Aufstelldach und dem Fahrzeug sind in der Regel Zeltbahnen aus Stoff angeordnet, die beim Aufstellen des Daches gespannt werden, so dass sich ein seitlich geschlossener zusätzlicher Raum ergibt. Beim Einklappen bzw. Schließen des Aufstelldaches falten sich diese Zeltbahnen zumeist selbstständig ins Fahrzeuginnere und diese werden dann von dem Aufstelldach zusammengedrückt. Aufgrund unterschiedlicher Faltungen der Zeltbahnen beim Einklappen oder auch aufgrund von Wärmeeinflüssen kann es nun jedoch dazu kommen, dass mitunter sehr viel Kraft aufgewendet werden muss, um das Aufstelldach aus dem Fahrzeuginneren so stark nach unten zu ziehen, bis das Verriegelungselement in oder hinter das Gegenverriegelungselement geschwenkt werden kann.

Davon ausgehend stellt sich die Erfindung die **Aufgabe**, eine Aufstelldachverriegelung anzugeben, die sich durch eine vereinfachte Verriegelung auszeichnet.

Diese Aufgabe wird bei einer Aufstelldachverriegelung der eingangs genannten Art dadurch **gelöst**, dass das Verriegelungselement derart ausgestaltet ist, dass es das Gegenverriegelungselement in einer Fangstellung fangen und dieses bei einer Drehung in die Verriegelungsstellung in Richtung der Verriegelungsachse bewegen kann.

Durch diese Ausgestaltung wird eine erleichterte Verriegelung des Aufstelldaches erreicht. Denn es ist nicht erforderlich, das Aufstelldach mit großer Kraft nach unten zu ziehen, damit das Verriegelungselement in oder hinter das Gegenverriegelungselement greifen kann, sondern durch die Fangstellung und die Bewegung in Richtung der Verriegelungsachse kann das Aufstelldach über die Aufstelldachverriegelung bzw. über die Drehbewegung des Verriegelungselements in Richtung des Fahrzeugs bzw. des Rahmens gezogen werden, was mit einer deutlich geringeren Kraftanstrengung einhergeht.

Für die Bewegung des Gegenverriegelungselements in Richtung der Verriegelungsachse ist es nicht zwingend erforderlich, dass die Verriegelungsachse feststehend ausgebildet und das Gegenverriegelungselement gegenüber dem Verriegelungselement bewegbar angeordnet ist, sondern vielmehr, dass das Verriegelungselement und das Gegenverriegelungselement relativ zueinander bewegbar angeordnet sind. Die Bewegung des Gegenverriegelungselements in Richtung der Verriegelungsachse kann insofern auch erreicht werden, indem die Verriegelungsachse in Richtung des Gegenverriegelungselements bewegt wird. Es ist sowohl möglich, dass das Gegenverriegelungselement feststehend ausgebildet ist, insbesondere fahrzeugseitig, und dass das Verriegelungselement bewegbar angeordnet ist, insbesondere aufstelldachseitig, als auch, dass das Verriegelungselement feststehend ausgebildet ist, insbesondere fahrzeugseitig, und dass das Gegenverriegelungselement bewegbar angeordnet ist, insbesondere aufstelldachseitig.

In Weiterbildung der Erfindung hat es sich als vorteilhaft herausgestellt, wenn das Verriegelungselement in der Fangstellung und die Verriegelungsachse einen Fangbereich bilden, wobei das Gegenverriegelungselement gefangen werden kann, wenn sich dieses im Fangbereich befindet. Durch den Fangbereich wird ermöglicht, dass das Gegenverriegelungselement nicht nur in einer fest definierten Position gefangen bzw. von dem Verriegelungselement hintergriffen werden kann, sondern dass ein Fangen in einem gewissen Bereich möglich ist. Insofern führt der Fangbereich zu einem Toleranzausgleich und es ist zur Verriegelung nicht erforderlich, das Aufstelldach in eine festdefinierte Position zu verbringen oder das Verriegelungselement in oder hinter das Gegenverriegelungselement zu schwenken.

In konstruktiver Hinsicht hat es sich im Hinblick auf das Verriegelungselement als vorteilhaft herausgestellt, wenn dieses zum Fangen des Gegenverriegelungselements als Fanghaken ausgebildet ist. Durch die Ausgestaltung als Fanghaken kann das Verriegelungselement bereits in der Fangstellung hinter das Gegenverriegelungselement greifen und dann in der Verriegelungsstellung für eine formschlüssige Verbindung mit dem Gegenverriegelungselement sorgen. In der verriegelten Stellung können das Verriegelungselement und das Gegenverriegelungselement formschlüssig miteinander verbunden sein, so dass sich das Aufstelldach dann nicht mehr öffnen lässt, sondern gegenüber dem Fahrzeug bzw. dem das Aufstelldach umgebenden Rahmen festgelegt und gesichert ist.

Da auf das Verriegelungselement mitunter große Kräfte einwirken können, sowohl beim Verriegelungsvorgang als auch in der Verriegelungsstellung, hat es sich als vorteilhaft herausgestellt, wenn dieses aus Stahl, insbesondere aus Feinguss, hergestellt ist. Dieser Werkstoff zeichnet sich durch eine hohe Stabilität und somit durch eine zuverlässige Kraftaufnahme und Langlebigkeit aus.

In Weiterbildung des Verriegelungselements hat es sich als vorteilhaft erwiesen, wenn dieses eine konkav gekrümmte Fangfläche aufweist, auf der das Gegenverriegelungselement bei einer Bewegung von der Fangstellung in die Verriegelungsstellung abgleiten kann. Durch die konkav ausgestaltete Fangfläche kann das Gegenverriegelungselement bei der Überführung des Verriegelungselements aus der Fangstellung in die Verriegelungsstellung in Richtung der Verriegelungsachse bewegt werden. Die Fangfläche kann als Gleitfläche ausgestaltet sein, so dass die Reibung zwischen der Fangfläche bzw. zwischen dem Verriegelungselement und dem Gegenverriegelungselement beim Abgleiten und damit auch der Verschleiß vergleichsweise geringgehalten werden kann.

Weiterhin kann durch die konkav gekrümmte Fangfläche auch erreicht werden, dass eine gewisse Relativbewegung des Verriegelungselements und des Gegenverriegelungselements in horizontaler Richtung, also senkrecht zur Schließrichtung, ermöglicht wird. Insofern kann das Gegenverriegelungselement durch die Fangfläche auch in horizontaler Richtung zentriert werden, was zu einer zuverlässigen Verriegelung führt.

In Weiterbildung des Verriegelungselements hat es sich als vorteilhaft herausgestellt, wenn dieses bogenförmig ausgestaltet ist. Die Außenfläche des Verriegelungselements kann somit parallel zur Fangfläche des Verriegelungselements geführt und insofern ebenfalls konkav ausgestaltet sein. Das Verriegelungselement kann einen Bogenwinkel von ca. 135 Grad aufweisen, was sich in der Praxis zum Fangen des Gegenverriegelungselements als vorteilhaft herausgestellt hat.

Gemäß einer vorteilhaften Weiterbildung der Erfindung wird vorgeschlagen, dass das Gegenverriegelungselement in der Verriegelungsstellung am Scheitelpunkt der Fangfläche anliegt, wodurch sich eine festdefinierte Verriegelungsposition und damit eine zuverlässige Verriegelung ergibt. Bei dem Scheitelpunkt kann es sich bspw. um den Punkt der Fangfläche handeln, der, je nach Einbausituation, in horizontaler Richtung den niedrigsten oder den höchsten Punkt der Fangfläche bildet. Wenn das Verriegelungselement aufstelldachseitig angeordnet ist, handelt es sich vorteilhaft um den niedrigsten Punkt.

Im Hinblick auf das Verriegelungselement hat es sich weiterhin als vorteilhaft herausgestellt, wenn dieses eine Anlauffläche, insbesondere eine endseitige Abrundung, für das Gegenverriegelungselement aufweist. Über die Anlauffläche kann gewährleistet werden, dass das Gegenverriegelungselement bei einer Drehbewegung in die Verriegelungsstellung zur Fangfläche überführt wird. Das Gegenverriegelungselement kann insofern bei Kontakt mit der Anlauffläche in Richtung der Fangfläche bewegt werden bzw. das Verriegelungselement kann beim Anlaufen an das Gegenverriegelungselement derart bewegt werden, dass die Fangfläche in Kontakt mit dem Gegenverriegelungselement kommt. Die Anlauffläche kann den Fangbereich begrenzen und insofern der Verriegelungsachse im Hinblick auf den Fangbereich gegenüberliegen. In konstruktiver Hinsicht kann die Anlauffläche bspw. als Anlaufschräge oder als Abrundung ausgestaltet sein, wobei sich die Ausgestaltung als Abrundung in der Praxis bewährt hat. Über die Abrundung können die Innenfläche, also die Fangfläche, und die Außenfläche des Verriegelungselements miteinander verbunden sein. Es kann sich um eine 180 Grad-Abrundung handeln. Der Fangbereich kann sich insofern von der Verriegelungsachse bis zur Mitte der Abrundung des Verriegelungselements erstrecken.

Um das Verriegelungselement um die Verriegelungsachse hin und her zu drehen, hat es sich als vorteilhaft herausgestellt, wenn dieses auf einer Betätigungswelle drehfest gelagert ist. Zur Verbindung des Verriegelungselements mit der Betätigungswelle kann ein Montageelement vorgesehen sein, welches beispielsweise einstückig an das Verriegelungselement angeformt sein kann. Bei der Betätigungswelle kann es sich um eine unrunde, insbesondere um eine Vierkantwelle handeln, auf die das Verriegelungselement bzw. das Montageelement aufgesteckt sein kann, so dass das Verriegelungselement dann in Drehrichtung formschlüssig mit der Betätigungswelle verbunden sein kann. Durch die Ausgestaltung als Vierkantwelle und die korrespondierend ausgestaltete Ausgestaltung des Montageelements kann eine werkzeuglose Montage und Demontage erreicht und gleichzeitig eine hohe Kraftübertragung zwischen Betätigungswelle und Verriegelungselement sichergestellt werden. Das Montageelement kann an dem der Anlauffläche gegenüberliegenden Ende des Verriegelungselements angeordnet sein.

Gemäß einer vorteilhaften Weiterbildung der Erfindung hat es sich als vorteilhaft herausgestellt, wenn die Verriegelungsachse in Richtung des Scheitelpunktes versetzt angeordnet ist. Durch diese Ausgestaltung wird der Bewegungsradius des Verriegelungselements und somit der Platzbedarf der Aufstelldachverriegelung verringert. Die Verriegelungsachse erstreckt sich somit nicht durch das Ende des Verriegelungselements, so wie dies bspw. bei einer Lagerung nach Art eines Arms vorgesehen wäre. Demnach kann auch das Montageelement gegenüber dem Verriegelungselement in Stück nach innen in Richtung des Scheitelpunktes der Fangfläche versetzt angeordnet sein. Wenn die konkave Fangfläche über deren Ränder fortgeschrieben wird, würde sich die Verriegelungsachse durch den von der Fangfläche aufgespannten Bereich erstrecken.

Zur Lagerung der Betätigungswelle hat es sich als vorteilhaft herausgestellt, wenn diese an ihren beiden Enden in Drehlagern um die Verriegelungsachse drehbar gelagert ist. Die Drehlager ermöglichen insofern eine Drehbewegung der Betätigungswelle und damit auch eine entsprechende Drehbewegung des Verriegelungselements. Weiterhin kann die Betätigungswelle derart in den Drehlagern gelagert sein, dass eine Axialbewegung der Betätigungswelle verhindert wird und diese nicht aus den Drehlagern herausrutschen kann. Das Verriegelungselement kann zwischen den beiden Drehlagern auf der Betätigungswelle angeordnet sein, was zu einem kompakten Aufbau führt. Gleichwohl ist es auch möglich, dass das Verriegelungselement nicht zwischen den beiden Drehlagern, sondern derart angeordnet ist, dass ein Drehlager zwischen dem Verriegelungselement und dem anderen Drehlager angeordnet ist. Bei dieser Anordnung kann die Betätigungswelle an einer Seite gegenüber einem Drehlager hervorstehen und das Verriegelungselement kann auf diesem hervorstehenden Ende der Betätigungswelle angeordnet sein. Diese Ausgestaltung erlaubt, dass das Verriegelungselement sehr nah an das Gegenverriegelungselement heranreichen kann und das Gegenverriegelungselement entsprechend kurz ausgeführt sein kann, wodurch sich die auf das Gegenverriegelungselement wirkenden Biegemomente verringern lassen.

Die Drehlager können aus Zink- oder Druckguss hergestellt sein und insofern eine hohe Stabilität aufweisen. Über die Drehlager kann die Aufstelldachverriegelung am Aufstelldach, insbesondere an der Unterseite des Aufstelldaches, montiert werden, so dass die Drehlager als Verriegelungsbefestigung fungieren können. Dazu kann jedes Drehlager über eine Schraubverbindung mit dem Aufstelldach verbunden werden. Jedes Drehlager kann zwei Bohrungen aufweisen, die eine entsprechende Schraubverbindung erlauben. Die Bohrungen können als Langlöcher ausgeführt sein, so dass eine gewisse Flexibilität bei der Montage gewährleistet wird. Zudem ist es möglich, über die Drehlager eine Verbindung mit dem Fahrzeug bzw. dem Rahmen des Fahrzeugs zu realisieren. In diesem Fall kann dann das Gegenverriegelungselement an dem bewegbaren Aufstelldach angeordnet sein.

Damit das Verriegelungselement um die Verriegelungsachse gedreht werden kann, wird gemäß einer vorteilhaften Weiterbildung vorgeschlagen, dass die Aufstelldachverriegelung einen Handhebel aufweist, über welchen das Verriegelungselement per Hand um die Verriegelungsachse drehbar ist. Über den Handhebel kann das Verriegelungselement somit manuell zwischen der Entriegelungsstellung, der Fangstellung und der Verriegelungsstellung hin- und herbewegt werden und das Aufstelldach insofern auch in dessen geschlossener Position verriegelt werden. Der Handhebel kann an der Betätigungswelle befestigt und mit dieser drehgekoppelt sein. Der Handhebel kann zu Verbindung eine Ausnehmung aufweisen, die an die Geometrie der Betätigungswelle angepasst sein kann, so dass sich eine formschlüssige Verbindung ergibt. Auch eine einstückige Verbindung zwischen Handhebel und Betätigungswelle kann vorgesehen sein. Insofern kann über den Handhebel die Betätigungswelle und damit dann auch das Verriegelungselement um die Verriegelungsachse bewegt werden. Der Handhebel kann zwischen den beiden Drehlagern angeordnet sein, was zu einer hohen Stabilität führt. Der Handhebel kann in der Verriegelungsstellung parallel zur Unterseite des Aufstelldaches angeordnet sein und an dieser anliegen. Um den Handhebel aus dieser Stellung in die Entriegelungsstellung zu bewegen, kann der Handhebel eine Ausnehmung aufweisen, so dass er per Hand hintergreifbar und damit dann um die Verriegelungsachse drehbar ist.

Ferner hat es sich als vorteilhaft herausgestellt, wenn das Verriegelungselement in die Entriegelungsstellung vorgespannt ist. Durch die Vorspannung muss das Verriegelungselement zur Überführung in die Verriegelungsstellung entgegen der Vorspannungskraft bewegt werden. Um die Vorspannkraft bereitzustellen, kann eine Feder vorgesehen sein, die am Handhebel angreift. Da der Handhebel und das Verriegelungselement über die Betätigungswelle miteinander drehgekoppelt sind, können insofern über die Feder sowohl der Handhebel als auch das Verriegelungselement und die Betätigungswelle entsprechend vorgespannt sein.

Gemäß einer vorteilhaften Weiterbildung der Erfindung wird vorgeschlagen, dass die Aufstelldachverriegelung in einer Montageebene an dem Aufstelldach oder an dem Fahrzeug montierbar ist. Die Montageebene kann insofern durch die Unterseiten der beiden Drehlager verlaufen, da über diese eine Montage am Aufstelldach oder am Fahrzeug bzw. am Rahmen des Fahrzeugs ermöglicht wird. Wenn das Verriegelungselement aufstelldachseitig angeordnet ist, kann die Montageebene der Unterseite des Aufstelldachs entsprechen.

Im Hinblick auf die Anordnung der Elemente hat es sich als vorteilhaft herausgestellt, wenn der Handhebel und das Verriegelungselement auf derselben Seite der Montageebene angeordnet sind. Dies ermöglicht eine Betätigung des Handhebels von der Seite, auf der auch das Verriegelungselement angeordnet ist, insbesondere von der Innenseite des Fahrzeugs. Weder zur Bewegung, also zum Öffnen oder zum Schließen, des Aufstelldaches sowie auch zur Ver- und Entriegelung muss das Fahrzeug nicht verlassen werden. In der Verriegelungsstellung kann der Handhebel parallel zur Montageebene angeordnet sein und in der Entriegelungsstellung kann der Handhebel senkrecht zur Montageebene angeordnet sein. Insofern können der Handhebel und damit auch das Verriegelungselement in der Entriegelungsstellung gegenüber der Verriegelungsstellung um 90 Grad gedreht sein.

In Weiterbildung des Verriegelungselements hat es sich als vorteilhaft herausgestellt, wenn ein Verriegelungsgehäuse vorgesehen ist, welches insbesondere die beiden Drehlager umgibt. Das Verriegelungsgehäuse kann die Komponenten der Aufstelldachverriegelung schützen. Zudem wird verhindert, dass Personen sich bspw. einen Finger in den bewegbaren Komponenten einklemmen. Das Verriegelungsgehäuse kann über die zur Montage der Aufstelldachverriegelung vorgesehenen Schrauben montiert werden. Insofern kann das Verriegelungsgehäuse an den beiden Drehlagern befestigt sein, ohne dass dafür zusätzliche Befestigungsmittel erforderlich sind. Zwischen den beiden Drehlagern kann das Verriegelungsgehäuse eine Ausnehmung aufweisen, in der der Handhebel angeordnet sein kann. Je nachdem, wo das Verriegelungselement angeordnet ist, kann dieses entweder neben dem Handhebel ebenfalls in der entsprechenden Ausnehmung angeordnet sein oder dieses kann, wie vorstehend beschrieben, auch außerhalb des Verriegelungsgehäuses neben den Drehlagern angeordnet sein.

Im Hinblick auf den Handhebel hat es sich als vorteilhaft herausgestellt, wenn dieser in der Verriegelungsstellung in eine Rastvorrichtung einrasten kann, die eine Bewegung des Handhebels verhindert. Wenn der Handhebel entsprechend eingerastet ist, ist dieser nicht bewegbar. Vorteilhaft kann der Handhebel in der Verriegelungsstellung in die Rastvorrichtung einrasten. Insofern befindet sich dann auch das Verriegelungselement zuverlässig in der Verriegelungsstellung und das Aufstelldach ist in dessen geschlossener Position gesichert. Weiterhin wird durch die Rastvorrichtung erreicht, dass keine Kraft benötigt wird, um den Handhebel bzw. das Verriegelungselement in der Verriegelungsstellung zu halten. Zudem können durch die Rastvorrichtung auch Kräfte aufgenommen werden, die ggf. zu einer unbeabsichtigten Entriegelung führen könnten.

Um eine entsprechende Rastverbindung zwischen dem Handhebel und der Rastvorrichtung zu ermöglichen, hat es sich als vorteilhaft herausgestellt, wenn der Handhebel eine Rastkontur und die Rastvorrichtung eine korrespondierend ausgestaltete Gegenrastkontur aufweist, wobei die Gegenrastkontur zur Verhinderung einer Hebelbewegung die Rastkontur formschlüssig sichern kann. Die Rastkontur und die Gegenrastkontur können automatisch ineinandergreifen, wenn der Handhebel in die Verriegelungsstellung überführt wird. Insofern ist eine sehr einfache Ein-Hand-Verriegelung möglich. Durch die formschlüssige Verbindung kann eine Hebelbewegung zuverlässig verhindert werden. Die Rastvorrichtung kann eine Feder aufweisen, die die Gegenrastkontur derart vorspannt, dass diese mit der Rastkontur des Handhebels automatisch verrastet, wenn der Handhebel in die Verriegelungsstellung bewegt wird. Die Rastkontur kann im Endbereich des Handhebels angeordnet sein, so dass dieser dann endseitig in die Rastvorrichtung eingeschwenkt und in dieser gesichert sein kann.

Im Hinblick auf die Rastvorrichtung hat es sich weiterhin als vorteilhaft herausgestellt, wenn die Gegenrastkontur und die Rastkontur per Hand, insbesondere über einen Druckknopf, außer Eingriff gebracht werden können. Durch Drücken des Druckknopfes kann die Rastvorrichtung den Handhebel freigeben, so dass dieser dann wieder frei bewegbar ist, die Aufstelldachverriegelung entriegelt und das Aufstelldach geöffnet werden kann. Der entsprechende Druckknopf kann entgegen der Kraft einer Feder bewegbar sein und mit der Gegenrastkontur gekoppelt sein, so dass durch eine Bewegung des Druckknopfs die Rastverbindung zwischen Gegenrastkontur und Rastkontur aufgehoben werden kann. Durch die Vorspannung des Handhebels in Richtung der Entriegelungsstellung kann der Handhebel bei Aufhebung der Verrastung aufspringen.

Gemäß einer vorteilhaften Weiterbildung der Erfindung wird vorgeschlagen, dass die Rastvorrichtung unabhängig von dem Verriegelungselement positionierbar ist. Durch diese Ausgestaltung kann auch im Hinblick auf die Anordnung der Rastvorrichtung ein Toleranzausgleich und eine größere Variabilität geschaffen werden. Bei der Rastvorrichtung kann es sich um ein separates Element handeln, welches nicht mit dem Verriegelungsgehäuse verbunden ist. Es ist insofern auch denkbar, auf die Rastvorrichtung zu verzichten, sofern eine anderweitige Sicherung des Handhebels bzw. des Verriegelungselements in der Verriegelungsstellung vorgesehen ist oder sofern eine entsprechende Sicherung nicht erforderlich sein sollte. Beispielsweise könnte der Handhebel dafür selbsthemmend ausgestaltet sein. Zur Anpassung der Position der Rastvorrichtung kann diese, ganz analog wie auch die Drehlager, über Langlöcher verfügen, die eine gewisse Anpassung bei der Montage ermöglichen. Durch die Unabhängigkeit der Rastvorrichtung wird zudem die Möglichkeit geschaffen, verschiedene Handhebel zu verwenden. Falls bspw. große Kräfte überwunden werden müssen, kann es sich anbieten, einen längeren Handhebel zu verwenden.

Im Hinblick auf das Gegenverriegelungselement hat es sich als vorteilhaft herausgestellt, wenn dieses bolzenförmig ausgestaltet ist. Durch die bolzenförmige Ausgestaltung kann das Gegenverriegelungselement auf dem Verriegelungselement abgleiten, ohne dass dabei ein hoher Verschleiß entsteht.

Gemäß einer vorteilhaften Weiterbildung wird vorgeschlagen, dass das Gegenverriegelungselement in der Höhe verstellbar angeordnet ist. Durch eine entsprechende Bewegbarkeit in der Höhe kann ein weiterer Toleranzausgleich geschaffen werden. Wenn die Höhe des Gegenverriegelungselements eingestellt ist, kann dieses feststehend angeordnet sein. Eine Bewegung des Gegenverriegelungselements ist aufgrund der Möglichkeit, dieses im gesamten Fangbereich zu fangen, nicht erforderlich. In konstruktiver Hinsicht kann das Gegenverriegelungselement an einer Führung angeordnet sein, die eine entsprechende Verstellung ermöglicht. Auch eine Horizontalbewegung des Gegenverriegelungselements kann vorteilhaft sein, um dann insofern einen Toleranzausgleich in zwei Achsen zu gewährleisten.

Im Hinblick auf das Gegenverriegelungselement hat es sich weiterhin als vorteilhaft herausgestellt, wenn dieses in der Verriegelungsstellung gegenüber dem Verriegelungselement hervorsteht. Das Gegenverriegelungselement kann insofern länger sein als dies eigentlich sein müsste. Insofern kann auch durch die Länge des Gegenverriegelungselements ein Toleranzausgleich bewirkt werden. Denn für die Verriegelung des Gegenverriegelungselements über das Verriegelungselement spielt die Länge des Gegenverriegelungselements im Grunde keine Rolle, so lange das Gegenverriegelungselement nicht zu einer Behinderung der weiteren Komponenten führt und die auftretenden Biegemomente von dem Gegenverriegelungselement ohne Probleme aufgenommen werden können.

Im Hinblick auf die eingangs genannte Aufgabe wird ferner eine Aufstelldachverriegelungsvorrichtung mit mindestens zwei Aufstelldachverriegelungen vorgeschlagen, wobei die Aufstelldachverriegelungen in der vorstehend beschriebenen Art und Weise ausgestaltet sein können. Weiterhin kann eine gemeinsame Betätigungswelle vorgesehen sein, über die die beiden Aufstelldachverriegelungen miteinander verbunden sein können. Aufgrund der gemeinsamen Betätigungswelle muss dann zur Bewegung beider Verriegelungselemente nur ein Handhebel betätigt werden. Es kann insofern vorgesehen sein, dass nur eine der beiden Aufstelldachverriegelungen einen Handhebel aufweist oder dass nur ein Handhebel zwischen den beiden Aufstelldachverriegelungen vorgesehen ist, der mit der gemeinsamen Betätigungswelle gekoppelt ist. Eine derartige Aufstelldachverriegelungsvorrichtung eignet sich insbesondere für eher schmalere Aufstelldächer, da bei zu breiten Aufstelldächern die auf die Betätigungswelle wirkenden Torsionskräfte ein zu tolerierendes Maximum überschreiten können. Zudem ist bei zwei separaten Aufstelldachverriegelungen eine höhere Flexibilität im Hinblick auf die Montage gegeben.

Im Hinblick auf die eingangs genannte Aufgabe wird ferner ein Fahrzeug mit einem Aufstelldach und mindestens einer Aufstelldachverriegelung vorgeschlagen, die in der vorstehend beschriebenen Weise ausgestaltet ist. Das Fahrzeug kann im Dachbereich einen das Aufstelldach umgebenen Rahmen aufweisen, an dem das Aufstelldach gelagert ist.

Vorteilhaft ist entweder das Verriegelungselement oder das Gegenverriegelungselement aufstelldachseitig angeordnet. In der Praxis hat es sich beispielsweise als vorteilhaft erwiesen, wenn das Verriegelungselement aufstelldachseitig und das Gegenverriegelungselement dann entsprechend fahrzeugseitig angeordnet ist. Das Gegenverriegelungselement kann dabei im oberen Bereich des Fahrzeugs bzw. am Rahmen angeordnet sein und sich in horizontaler Richtung erstrecken. Das aufstelldachseitige Verriegelungselement kann über die Drehlager an der Unterseite des Aufstelldaches montiert und daher zusammen mit dem Aufstelldach bewegbar sein.

Beim Fangen des Gegenverriegelungselements durch das Verriegelungselement und bei der Relativbewegung des Gegenverriegelungselements und der Verriegelungsachse aufgrund der Bewegung des Verriegelungselements von der Fangstellung in die Verriegelungsstellung kann das Aufstelldach in Richtung des Fahrzeugs bewegt und von unten auf dieses auf dieses bzw. auf den Rahmen gezogen werden. In der Verriegelungsstellung kann das Aufstelldach dann möglichst eng am Fahrzeug bzw. am Rahmen anliegen und eine zwischen den Aufstelldach und dem Fahrzeug bzw. dem Rahmen angeordnete Dichtung komprimieren. Durch die Komprimierung der Dichtung kann vermieden werden, dass Wasser durch den Spalt zwischen Aufstelldach und Fahrzeug in das Fahrzeuginnere vordringen kann. Zudem kann durch die wirkende Anpresskraft verhindert werden, dass das Aufstelldach bei der Fahrt klappert. Die Wirkung der Aufstelldachverriegelung bei der umgekehrten Montage, also bei einer fahrzeugseitigen Anordnung des Verriegelungselements und einer fahrzeug- bzw. rahmenseitigen Anordnung des Gegenverriegelungselements ist entsprechend.

Weitere Einzelheiten und Vorteile der Erfindung sollen nachfolgend anhand eines in den Zeichnungen dargestellten exemplarischen Ausführungsbeispiels näher erläutert werden. Darin zeigen:
- Fig. 1a, 1b: ein Fahrzeug mit einem Aufstelldach in zwei verschiedenen Positionen;
- Fig. 2: eine Aufstelldachverriegelung in einer perspektivischen Explosionsansicht;
- Fig. 3a bis 3d: die Aufstelldachverriegelung gemäß der Fig. 2 in verschiedenen Positionen;
- Fig. 4a bis 4c: weitere perspektivische Seitenansichten der Aufstelldachverriegelung in verschiedenen Positionen;
- Fig. 5a, 5b: seitliche Schnittansichten durch die Aufstelldachverriegelung;
- Fig. 6a, 6b: perspektivische Schnittansichten durch eine Rastvorrichtung.

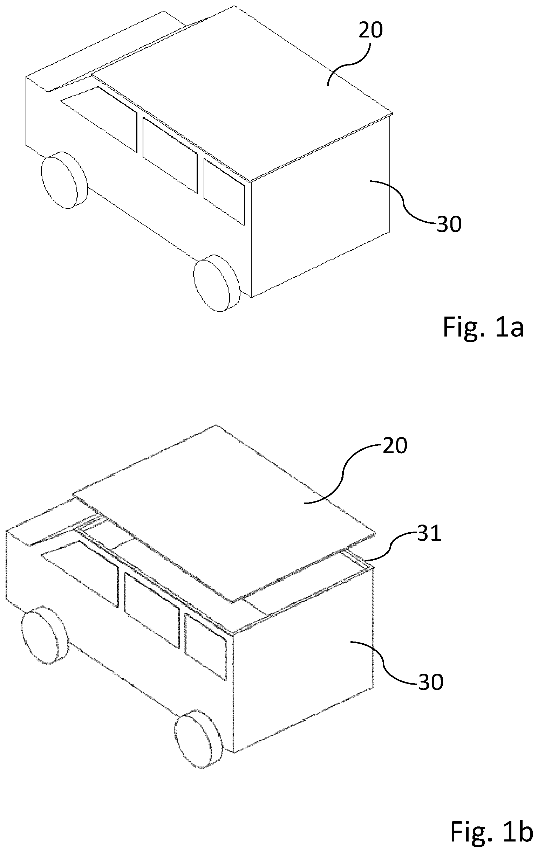

In der schematischen Darstellung der Fig. 1a ist ein Fahrzeug 30 mit einem Aufstelldach 20 in einer perspektivischen Seitenansicht gezeigt. Das Aufstelldach 20 befindet sich dabei in dessen geschlossener Position, so dass es flach auf dem Fahrzeug 30 aufliegt und im Grunde kaum zu erkennen ist. Das Fahrzeug 30 weist im Dachberiech einen das Aufstelldach 20 umgebenden Rahmen 31 auf, der in der Fig. 1b zu erkennen ist und an dem das Aufstelldach 20 gelagert ist. Um den Platz im Fahrzeuginnenraum zu vergrößern, kann das Aufstelldach 20 über eine Hubbewegung vom Fahrzeug 30 abgehoben werden, so dass dadurch der Fahrzeuginnenraum nach oben hin vergrößert wird. Dafür kann aus dem Inneren des Fahrzeugs 30 von unten gegen das Aufstelldach gedrückt werden und dieses insofern aufgestellt werden. Die geöffnete oder aufgestellte Position ist in der Fig. 1b darstellt. Nicht mit dargestellt sind dabei Zeltplanen, die zwischen dem Aufstelldach 20 und dem Rahmen 31 angeordnet sind und die den durch das Aufstelldach 20 zusätzlich geschaffenen Innenraum seitlich verschließen. Auch das Hubgestänge, über welches das Aufstelldach 20 in der aufgestellten Position gehalten wird, ist nicht mit dargestellt.

Wie man sich anhand der Fig. 1b leicht vorstellen kann, ist es nur möglich, das Aufstelldach 20 im Stillstand aufzustellen und zu verwenden. Bevor das Fahrzeug 30 daher bewegt werden kann, muss das Aufstelldach 20 zunächst wieder in die geschlossene Position verbracht und in dieser gesichert bzw. verriegelt werden. Eine Verriegelung des Aufstelldaches 20 ist erforderlich, damit sich dieses bei der Fahrt nicht unbeabsichtigt öffnet oder es zu unerwünschten Vibrationen oder Klappergeräuschen kommt.

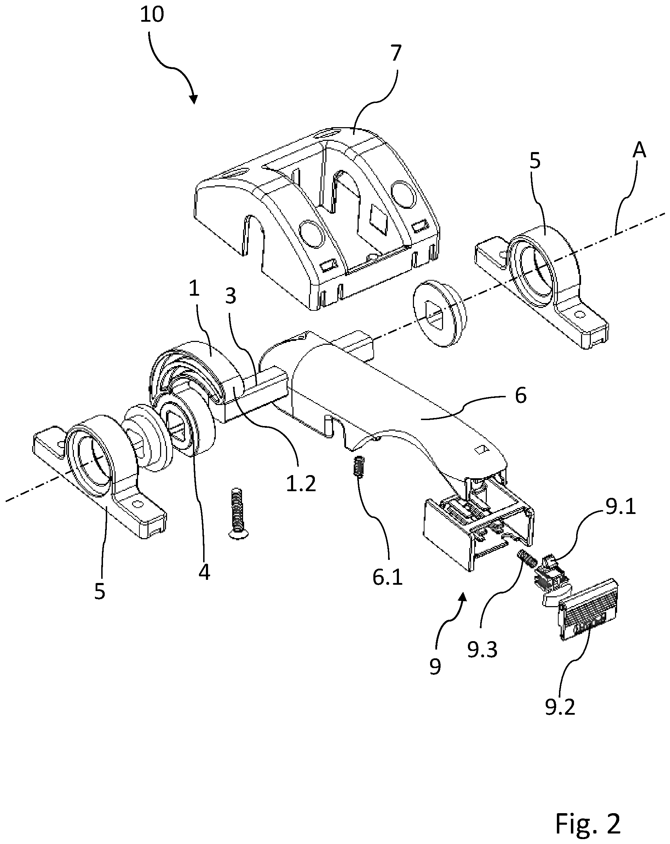

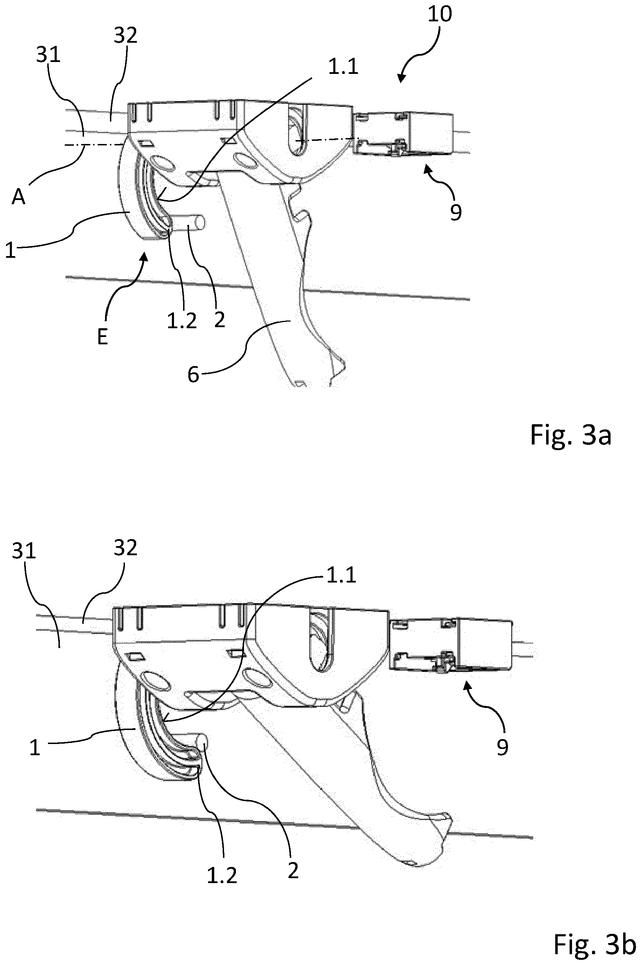

Um das Aufstelldach 20 in dessen geschlossener Position entsprechend zu verriegeln, ist eine Aufstelldachverriegelung 10 vorgesehen, die in der Darstellung der Fig. 2 in einer Explosionsdarstellung gezeigt ist. Mit der Aufstelldachverriegelung 10 kann sichergestellt werden, dass das Aufstelldach 20 in dessen geschlossener Position verriegelt und sich dann in dieser Stellung nicht mehr gegenüber dem Fahrzeug 30 bzw. dem Rahmen 31 bewegen lässt. Die Aufstelldachverriegelung 10 umfasst im Wesentlichen zwei Elemente, nämlich ein zwischen einer Entriegelungsstallung E und einer Verriegelungsstellung V hin und her drehbares Verriegelungselement 1 sowie ein bolzenförmiges Gegenverriegelungselement 2. So wie dies bspw. anhand der Darstellungen der Fig. 3a bis 3d zu erkennen ist, ist das Verriegelungselement 1 dabei an der Unterseite des Aufstelldaches 20 angeordnet und insofern zusammen mit dem Aufstelldach 20 bewegbar und das Gegenverriegelungselement 2 ist im oberen Bereich des Fahrzeugs 30 bzw. des Rahmens 31 angeordnet und dieses erstreckt sich in horizontaler Richtung.

So wie dies anhand der Darstellung in der Fig. 2 weiter zu erkennen ist, ist das Verriegelungselement 1 auf einer in zwei Drehlagern 5 drehbar gelagerten Betätigungswelle 3 befestigt. Die Betätigungswelle 3 ist als Vierkantwelle ausgestaltet, auf die das Verriegelungselement 1 über ein Montageelement 4 aufgeschoben ist. Das Montageelement 4 weist dabei eine vierkantförmige Aufnahme auf, die an die Betätigungswelle 3 angepasst ist, so dass die Betätigungswelle 3 und das Verriegelungselement 1 über das einstückig mit dem Verriegelungselement 1 verbundene Montageelement 4 mit der Betätigungswelle 3 drehgekoppelt ist. Über eine Drehbewegung der Betätigungswelle 3 lässt sich somit das Verriegelungselement 1 zwischen der Entriegelungsstellung E und der Verriegelungsstellung V hin und her drehen, wobei sich die Verriegelungsachse A mittig durch die Betätigungswelle 3 erstreckt.

Neben dem Verriegelungselement 1 ist zudem auch ein Handhebel 6 auf der Betätigungswelle 3 angeordnet und ebenfalls drehfest mit dieser verbunden. Über den Handhebel 6 lässt sich die Betätigungswelle 3 und damit auch das Verriegelungselement 1 um die Verriegelungsachse A hin und her drehen.

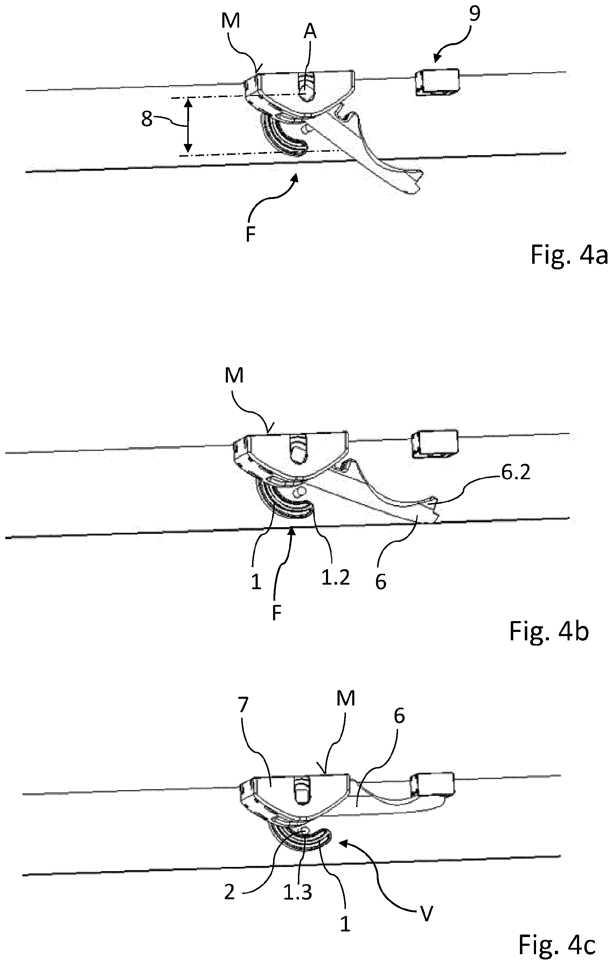

Über die beiden Drehlager 5 lässt sich die gesamte Konstruktion in einer Montageebene M, die in der Darstellung der Fig. 4a bis 4c dargestellt ist, mit der Unterseite des Aufstelldachs 20 verbinden, so dass die Unterseite des Aufstelldaches dann mit der Montageebene M zusammenfällt. Die beiden Drehlager 5 weisen zur Verbindung jeweils zwei Bohrungen auf, über die diese von unten an das Aufstelldach 20 angeschraubt werden können. Über die entsprechenden Befestigungsschrauben kann zudem auch noch das als Abdeckung fungierende Verriegelungsgehäuse 7 mit den beiden Drehlagern 5 verbunden werden. Das Verriegelungsgehäuse 7 weist jedoch im mittleren Bereich eine Ausnehmung auf, so dass dieses eine Drehbewegung des Handhebels 7 nicht behindert.

Bei der Explosionsdarstellung der Fig. 2 befindet sich das Verriegelungselement 1 zwischen dem Drehlager 5 und dem Handhebel 6. Zwar ist diese Konfiguration grundsätzlich möglich und das Verriegelungselement 1 wäre dann zusammen mit dem Handhebel 6 in der Ausnehmung des Verriegelungsgehäuses 7 angeordnet, gleichwohl kann die Position des Drehlagers 5 und des Verriegelungselements 1 auch getauscht sein. Bei dieser Konfiguration ist dann das Verriegelungselement 1 nicht zwischen den beiden Drehlagern 5 angeordnet, sondern an einem gegenüber dem Drehlager 5 hervorstehenden Ende der Betätigungswelle 3, so wie dies in den Darstellungen der Fig. 3a bis 3d zu erkennen ist. Das Verriegelungselement 1 ist dann außerhalb des Verriegelungsgehäuses 7 angeordnet. An der grundsätzlichen Lagerung der Betätigungswelle 3, an der Befestigung am Aufstelldach 20 sowie auch an der Betätigung des Verriegelungselements 1 über den Handhebel 6 ändert dies jedoch nichts.

So wie dies anhand der Fig. 2 weiterhin zu erkennen ist, ist das Verriegelungselement 1 bogenförmig ausgestaltet und die Verriegelungsachse A erstreckt sich durch den von der Bogenform umschriebenen Bereich. Um dies zu erreichen, ist das Montageelement 4 gegenüber dem Verriegelungselement 1 ein Stück nach innen, also in Richtung der Verriegelungsachse A, versetzt, so dass sich die Verriegelungsachse A im Grunde nicht durch das Verriegelungselement 1 selbst erstreckt. Die Funktionsweise dieser Anordnung und der Ausgestaltung des Verriegelungselements 1 wird nachfolgend anhand der weiteren Figuren noch näher beschrieben.

In der Darstellung der Fig. 4a ist die Aufstelldachverriegelung 10 in einer Seitenansicht gezeigt. Das Aufstelldach 20 befindet sich dabei in dessen geschlossener Position, in der es jedoch noch nicht verriegelt und insofern locker und per Hand bewegbar auf dem Fahrzeug 30 aufliegt. Aufgrund der Bogenform des Verriegelungselements 1 sowie der Anordnung der Verriegelungsachse A ist das Verriegelungselement 1 in der Lage, bei einer Bewegung von der Entriegelungsstellung E in die Verriegelungsstellung V das Gegenverriegelungselement 2 in Richtung der Verriegelungsachse A zu ziehen, wodurch das Aufstelldach 20 von oben gegen das Fahrzeug 30 bzw. den entsprechenden Rahmen 31 des Fahrzeugs 30 gedrückt bzw. gezogen wird. Da das Gegenverriegelungselement 2 fahrzeugseitig und damit feststehend angeordnet ist, wird bei dieser Zugbewegung das Verriegelungselement 1 und auch die Verriegelungsachse V nach unten in Richtung des Gegenverriegelungselements 2 bewegt. Aufgrund der Relativbewegung von Verriegelungselement 1 und Gegenverriegelungselement 2 wird dann das Aufstelldach 20 auf das Fahrzeug 30 gedrückt, bis dieses fest und unbewegbar auf dem Fahrzeug 30 bzw. auf dem Rahmen 31 aufliegt, wenn sich das Verriegelungselement 1 in der Verriegelungsstellung V befindet.

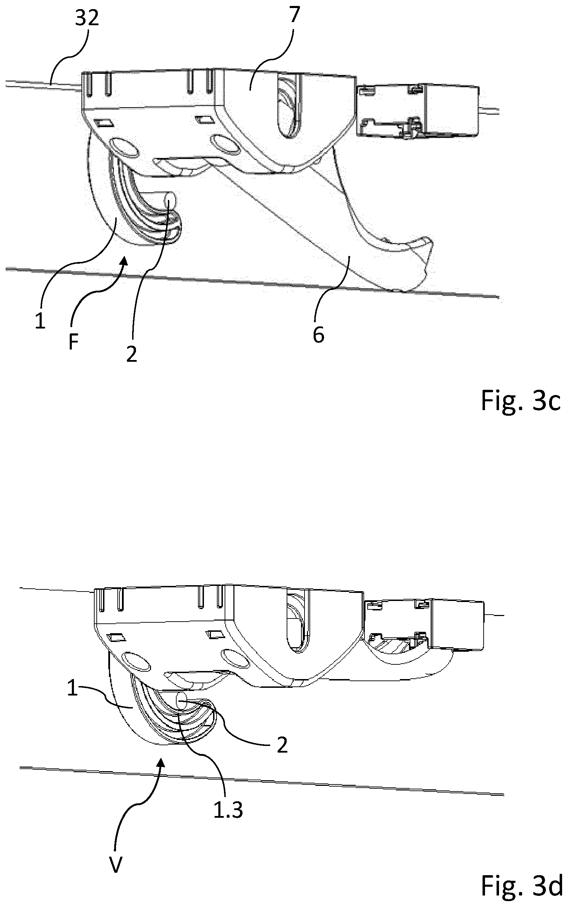

Die verschiedenen Positionen des Aufstelldaches 20 und die verschiedenen Stellungen des Verriegelungselements 1 sind auch in den Fig. 3a bis 3d zu erkennen. Bei der Darstellung der Fig. 3a liegt das Aufstelldach 20 locker auf dem Rahmen 31 auf, was anhand des Spaltes 32 zwischen dem Aufstelldach 20 und Rahmen 31 ersichtlich ist. Wenn dann das Verriegelungselement 1 in die Stellung gemäß Fig. 3c verbracht wird, hintergreift das Verriegelungselement 1 das Gegenverriegelungselement 2. Bei einer weitergehenden Drehbewegung des Verriegelungselements 1 bewegen sich dann die Verriegelungsachse V und das Gegenverriegelungselement 2 aufeinander zu, wodurch sich der Spalt 32 verkleinert. In der Fig. 3d ist der Spalt 32 dann komplett geschlossen und das Aufstelldach 20 ist verriegelt.

Um eine entsprechende Relativbewegung von Verriegelungsachse A und Gegenverriegelungselement 2 zu bewirken, muss das Verriegelungselement 1 das Gegenverriegelungselement 2 bei der Überführung von der Entriegelungsstellung E in die Verriegelungsstellung V zunächst hintergreifen. Dabei ist es nicht erforderlich, dass sich die beiden Elemente in einer festdefinierten Position zueinander befinden, sondern das Verriegelungselement 1 schließt mit der Verriegelungsachse V vielmehr einen Fangbereich 8 ein, der in der Darstellung der Fig. 4a zu erkennen ist. Wenn sich das Gegenverriegelungselement 2 in diesem Fangbereich 8 befindet, kann das Verriegelungselement 1 das Gegenverriegelungselement 2 bei der Überführung in die Verriegelungsstellung V hintergreifen und dann dafür sorgen, dass das Gegenverriegelungselement 2 in Richtung der Verriegelungsachse A bzw. die Verriegelungsachse A in Richtung des Gegenverriegelungselements 2 gezogen wird. Dabei wird das Aufstelldach 20 auf das Fahrzeug 30 gedrückt.

Wie dies bei einem Vergleich der Fig. 4a und 4b, in denen sich das Verriegelungselement 1 in der Fangstellung F befindet, ersichtlich ist, weist das Gegenverriegelungselement 2 in vertikaler Richtung einen gewissen Abstand gegenüber dem Verriegelungselement 1 auf. Insofern müssen das Verriegelungselement 1 und das Gegenverriegelungselement 2 keine fest definierten Positionen zueinander aufweisen, sondern der Fangbereich 8 fungiert als Toleranzbereich, in welchem sich das Gegenverriegelungselement 2 befinden muss. Es ist daher auch nicht erforderlich, dass das Aufstelldach 20 bspw. unter großer Kraftanstrengung per Hand aus dem Fahrzeuginneren nach unten gezogen werden muss, damit das Verriegelungselement 1 das Gegenverriegelungselement 2 hintergreifen kann, sondern eine entsprechende Bewegung kann durch Fangen des Gegenverriegelungselements 2 und durch anschließendes Drehen des Verriegelungselement 1 in die Verriegelungsstellung V deutlich einfacher erreicht werden. Aufgrund der in der Regel undefinierten Faltung der Zeltplane beim Schließen des Aufstelldaches sowie auch aufgrund von Temperatureinflüssen kann es dazu kommen, dass das Aufstelldach 20 in der geschlossenen, jedoch noch nicht verriegelten Position geringfügig unterschiedlich positioniert ist. Da das Gegenverriegelungselement 2 im Fangbereich 8 von dem Verriegelungselement 1 hintergriffen werden kann und eine Bewegung des Verriegelungselements 1 dann zu einer formschlüssigen Verbindung von Verriegelungselement 1 und Gegenverriegelungselement 2 führt, können insofern leicht unterschiedliche Positionen des Aufstelldaches 20 in der geschlossenen Position bzw. der Aufstelldachverriegelung 10 kompensiert werden.

Im vorderen Bereich weist das Verriegelungselement 1 eine Abrundung 1.2 auf, die das untere Ende des Fangbereichs 8 definiert. Wenn sich das Gegenverriegelungselement 2 im unteren Ende des Fangbereichs 8 befindet, kann das Verriegelungselement 1, wenn dieses mit der Abrundung 1.2 gegen das Gegenverriegelungselement 2 läuft, automatisch ein Stück nach unten bewegt werden, so dass das Verriegelungselement 1 das Gegenverriegelungselement 2 dann hintergreift. Die Abrundung 1.2 bzw. zumindest die obere Hälfte der Abrundung fungiert insofern als Anlauffläche, die dafür sorgt, dass das das Gegenverriegelungselement 2 auch in diesem Randbereich noch gefangen werden kann. Andere konstruktive Ausgestaltungen der Anlauffläche sind möglich.

Wenn das Verriegelungselement 2 ausgehend von der Fangstellung F gemäß der Darstellung in der Fig. 4b in die Verriegelungsstellung V bewegt wird, gleitet dabei das Gegenverriegelungselement 2 auf der Innenfläche des Verriegelungselements 1 ab. Da diese Innenfläche beim Fangen des Gegenverriegelungselements 2 mit diesem in Kontakt kommt, wird die entsprechende Innenfläche auch als Fangfläche 1.1 bezeichnet.

Wenn das Gegenverriegelungselement 2 sich im unteren Bereich des Fangbereichs 8 befindet, kann dieses bei einer Drehbewegung des Verriegelungselements 1 an der Abrundung 1.2 anschlagen und dann durch die Abrundung 1.2 bei einer weitergehenden Drehung des Verriegelungselements 1 auf die Fangfläche 1.1 gleiten. Die Fangfläche 1.1 hat eine konkave Form, so dass das Gegenverriegelungselement 2 bei der Überführung des Verriegelungselements von der Fangstellung F in die Verriegelungsstellung V auf der Fangfläche 1.1 entlangläuft, bis dieses den Scheitelpunkt 1.3 der Fangfläche 1.1 erreicht hat. Diese Verriegelungsstellung V ist bspw. in der Darstellung der Fig. 4c zu erkennen.

Durch die Drehbewegung des Verriegelungselements 1 gleitet das Gegenverriegelungselement 2 nicht nur auf der Fangfläche 1.1 ab, sondern es wird zudem auch auf die Verriegelungsachse A zubewegt bzw. es wird die Verriegelungsachse A zusammen mit dem Aufstelldach 20 in Richtung des Gegenverriegelungselements 2 gezogen. In der Verriegelungsstellung V, die in der Fig. 3d und 4c zu erkennen ist, liegt das Aufstelldach 20 dann fest auf dem Fahrzeug 30 bzw. auf dem Rahmen 31 auf und das Gegenverriegelungselement 2 liegt am Scheitelpunkt 1.3 der Fangfläche 1.1. Durch die Bogenform des Verriegelungselements 1 kann die Verriegelung aufgrund einer Relativbewegung in horizontaler Richtung nicht gelöst werden und das Gegenverriegelungselement 2 insofern auch nicht aus dem Verriegelungselement 1 rutschen.

In der Verriegelungsstellung V erstreckt sich der Handhebel 6 parallel zur Montageebene M bzw. zur Unterseite des Aufstelldaches 20. Um den Handhebel aus dieser Stellung in die Entriegelungsstellung E zu drehen, weist der Handhebel 6 eine Ausnehmung auf, die bspw. in der Fig 4c gut zu erkennen ist. Über diese Ausnehmung kann eine Person hinter, also zwischen den Handhebel 6 und die Montageebene M greifen und den Handhebel 5 zur Entriegelung der Aufstelldachverriegelung 10 zurück in die Entriegelungsstellung E drehen.

So wie dies anhand der Fig. 4a ersichtlich ist, ist mit einem gewissen Abstand zum Verriegelungsgehäuse 7 an der Unterseite des Aufstelldachs 20 eine Rastvorrichtung 9 montiert, in die der Handhebel 6 in der Verriegelungsstellung V einrasten kann. Wenn der Handhebel 6 entsprechend eingerastet ist, lässt sich dieser nicht mehr bewegen. Aufgrund der Drehkupplung von Handhebel 6 und Verriegelungselement 1 ist dann auch dieses in der Verriegelungsstellung V gesichert und das Aufstelldach 20 zuverlässig verriegelt.

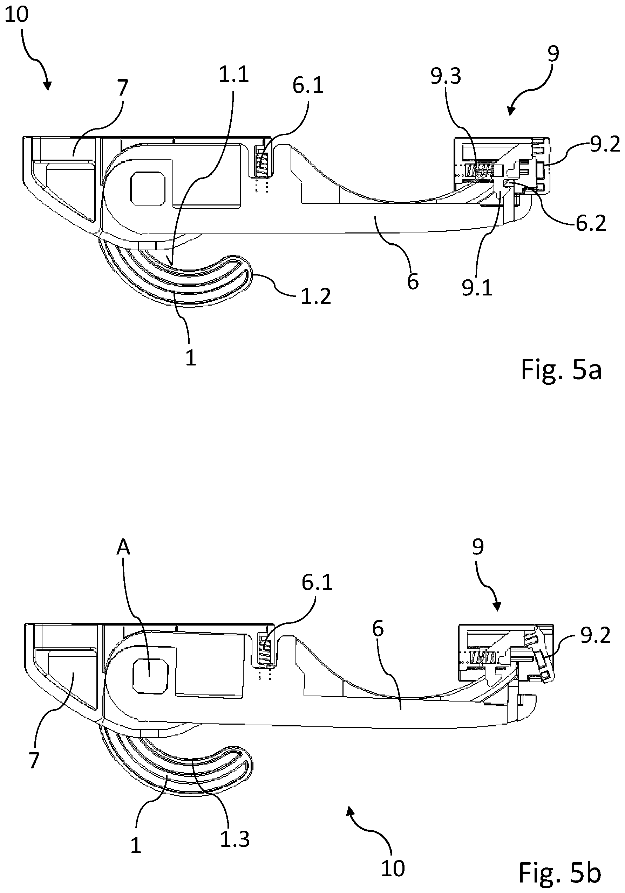

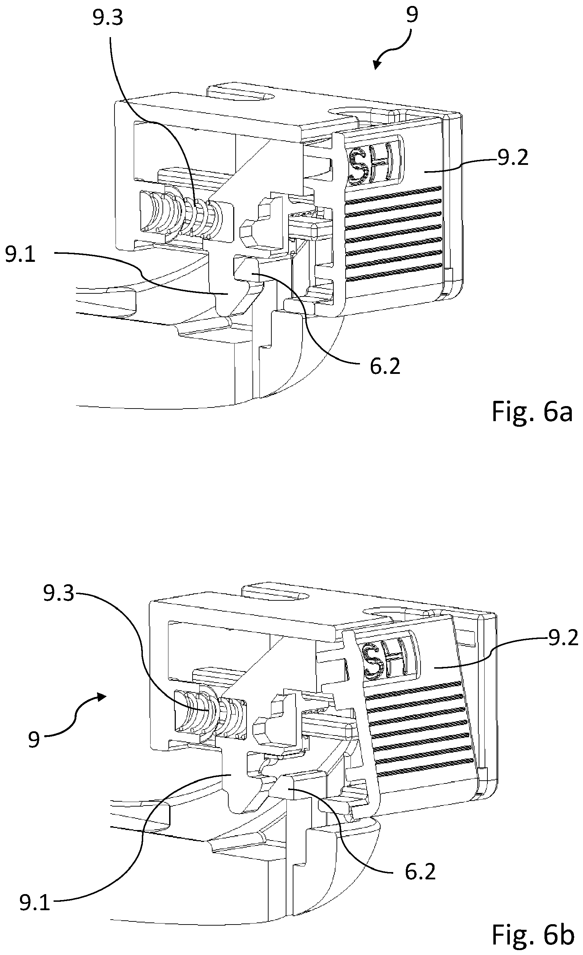

Durch die Unabhängigkeit der Rastvorrichtung 9 von den übrigen Komponenten, kann diese eigenständig platziert und montiert werden, was insofern auch die Möglichkeit eröffnet, Handhebel 6 verschiedener Länge und Gestalt zu verwenden. Das Zusammenspiel des Handhebels 6 und der Rastvorrichtung 9 sowie der innere Aufbau der Rastvorrichtung 9 ist in den Fig. 5a und 5b sowie 6a und 6b zu erkennen. Der Handhebel 6 weist an seinem hinteren Ende eine hakenförmige Rastkontur 6.2 auf, die in der Verriegelungsstellung V in eine korrespondierend ausgestaltete Gegenrastkontur 9.1 der Rastvorrichtung 9 eingreifen kann. Die Gegenrastkontur 9.1 ist über eine Feder 9.3 vorgespannt, kann jedoch durch Einschwenken des Handhebels 6 bzw. der Rastkontur 6.2 in die Rastvorrichtung 9 entgegen der Federkraft bewegt werden. Um die Gegenrastkontur 9.1 entsprechend zu bewegen, weisen sowohl die Rastkontur 6.2 als auch die Gegenrastkontur 9.1 korrespondierend ausgestaltete Anlaufschrägen auf, die dafür sorgen, dass die Gegenrastkontur 9.1 beim Einschwenken des Handhebels 6 selbstständig entgegen der Kraft der Feder 9.3 bewegt wird. Wenn die Rastkontur 6.2 so weit eingeschwenkt wurde, dass die Rastkontur 6.2 die Gegenrastkontur 9.1 hintergreift, verrastet die Gegenrastkontur 9.1 automatisch mit der Rastkontur 6.2 und der Handhebel 6 kann dann nicht wieder zurück um die Verriegelungsachse A in die Entriegelungsstellung E gedreht werden.

Um das Aufstelldach 20 zu öffnen, muss das Verriegelungselement 1 zurück in die Entriegelungsstellung E gedreht werden, wofür zunächst die Verrastung des Handhebels 6 gelöst werden muss. Die Rastvorrichtung 9 weist dafür einen Druckknopf 9.2 auf, der mit der Gegenrastkontur 9.1 in Verbindung steht und über den die Gegenrastkontur 9.1 entgegen der Kraft der Feder 9.3 bewegt werden kann. Durch Drücken des Druckknopfes 9.2 wird die Gegenrastkontur 9.1 in Richtung der Verriegelungsachse A bewegt, so dass die Gegenrastkontur 9.1 die Rastkontur 6.2 nicht mehr hintergreift, sondern diese freigibt. Der Handhebel 6 kann dann zurückgeschwenkt und dadurch das Verriegelungselement aus der Verriegelungsstellung V in die Entriegelungsstellung E überführen, wodurch das Gegenverriegelungselement 2 freigegeben wird.

Da der Handhebel 6 über eine in der Fig. 2 zu erkennende Feder 6.1 in Richtung der Entriegelungsstellung E vorgespannt ist, schnappt die Aufstelldachverriegelung 10 im Grunde selbstständig auf, wenn durch Drücken des Druckknopfs 9.2 die Verrastung des Handhebels 6 gelöst wird. Weiterhin führt die Vorspannung über die Feder 6.1 dazu, dass sich der Handhebel 6 und damit auch das Verriegelungselement 1 im kraftfreien Zustand in der Entriegelungsstellung E befinden, so dass das Aufstelldach 20 ohne Behinderung durch die Aufstelldachverriegelung 10 geschlossen werden und dieses dann in einem nächsten Schritt durch Überführen des Verriegelungselements 1 in die Verriegelungsstellung V verriegelt werden kann.

### Bezugszeichen:

- 1: Verriegelungselement
- 1.1: Fangfläche
- 1.2: Abrundung
- 1.3: Scheitelpunkt
- 2: Gegenverriegelungselement
- 3: Betätigungswelle
- 4: Montageelement
- 5: Drehlager
- 6: Handhebel
- 6.1: Feder
- 6.2: Rastkontur
- 7: Verriegelungsgehäuse
- 8: Fangbereich
- 9: Rastvorrichtung
- 9.1: Gegenrastkontur
- 9.2: Druckknopf
- 9.3: Feder
- 10: Aufstelldachverriegelung
- 20: Aufstelldach
- 30: Fahrzeug
- 31: Rahmen
- 32: Spalt

- A: Verriegelungsachse
- E: Entriegelungsstellung
- F: Fangstellung
- M: Montageebene
- V: Verriegelungsstellung

## Patentansprüche

1. Aufstelldachverriegelung zur Verriegelung eines Aufstelldaches (20) eines Fahrzeugs (30) in dessen geschlossener Position, mit einem um eine Verriegelungsachse (A) zwischen einer Verriegelungsstellung (V) und einer Entriegelungsstellung (E) hin und her drehbaren Verriegelungselement (1), und einem Gegenverriegelungselement (2) welches von dem Verriegelungselement (1) zur Verriegelung des Aufstelldaches (20) hintergreifbar ist,
**dadurch gekennzeichnet,**
**dass** das Verriegelungselement (1) derart ausgestaltet ist, dass es das Gegenverriegelungselement (2) in einer Fangstellung (F) fangen und dieses bei einer Drehung in die Verriegelungsstellung (V) in Richtung der Verriegelungsachse (A) bewegen kann.

2. Aufstelldachverriegelung nach Anspruch 1, **dadurch gekennzeichnet, dass** das Verriegelungselement (1) in der Fangstellung (F) und die Verriegelungsachse (A) einen Fangbereich (8) bilden, wobei das Gegenverriegelungselement (2) gefangen werden kann, wenn sich dieses im Fangbereich (8) befindet.

3. Aufstelldachverriegelung nach einem der Ansprüche 1 oder 2,
**dadurch gekennzeichnet, dass** das Verriegelungselement (1) eine konkav gekrümmte Fangfläche (1.1) aufweist, auf der das Gegenverriegelungselement (2) bei einer Bewegung von der Fangstellung (F) in die Verriegelungsstellung (V) abgleiten kann.

4. Aufstelldachverriegelung nach einem der vorhergehenden Ansprüche, **dadurch gekennzeichnet, dass** das Gegenverriegelungselement (2) in der Verriegelungsstellung (V) am Scheitelpunkt (1.3) der Fangfläche (1.1) anliegt.

5. Aufstelldachverriegelung nach einem der vorhergehenden Ansprüche, **dadurch gekennzeichnet, dass** das Verriegelungselement (1) auf einer Betätigungswelle (3) drehfest gelagert ist.

6. Aufstelldachverriegelung nach Anspruch 5, **dadurch gekennzeichnet, dass** die Betätigungswelle (3) an ihren beiden Enden in Drehlagern (5) um die Verriegelungsachse (A) drehbar gelagert ist.

7. Aufstelldachverriegelung nach einem der vorhergehenden Ansprüche, **gekennzeichnet durch** einen Handhebel (6), über den das Verriegelungselement (1) per Hand um die Verriegelungsachse (A) drehbar ist.

8. Aufstelldachverriegelung nach einem der vorhergehenden Ansprüche, **dadurch gekennzeichnet, dass** das Verriegelungselement (1) in die Entriegelungsstellung (E) vorgespannt ist.

9. Aufstelldachverriegelung nach einem der vorhergehenden Ansprüche, **dadurch gekennzeichnet, dass** die Aufstelldachverriegelung (10) in einer Montageebene (M) an dem Aufstelldach (20) oder an dem Fahrzeug (30) montierbar ist.

10. Aufstelldachverriegelung nach Anspruch 9, **dadurch gekennzeichnet, dass** der Handhebel (6) und das Verriegelungselement (1) auf derselben Seite der Montageebene (M) angeordnet sind.

11. Aufstelldachverriegelung nach einem der vorhergehenden Ansprüche, **dadurch gekennzeichnet, dass** der Handhebel (6) in der Verriegelungsstellung (V) in eine Rastvorrichtung (9) einrasten kann, die eine Bewegung des Handhebels (6) verhindert.

12. Aufstelldachverriegelung nach Anspruch 11, **dadurch gekennzeichnet, dass** der Handhebel (6) eine Rastkontur (6.2) und die Rastvorrichtung (9) eine korrespondierend ausgestaltete Gegenrastkontur (9.1) aufweist und die Gegenrastkontur (9.1) zur Verhinderung einer Handhebelbewegung die Rastkontur (6.2) formschlüssig sichern kann.

13. Aufstelldachverriegelung nach einem der Ansprüche 11 oder 12,
**dadurch gekennzeichnet, dass** die Rastvorrichtung (9) unabhängig von dem Verriegelungselement (1) positionierbar ist.

14. Aufstelldachverriegelungsvorrichtung mit mindestens zwei Aufstelldachverriegelungen (10) nach einem der vorhergehenden Ansprüche, wobei die Aufstelldachverriegelungen (10) über eine gemeinsame Betätigungswelle (3) miteinander verbunden sind.

15. Fahrzeug mit einem Aufstelldach (20) und mindestens einer Aufstelldachverriegelung nach einem der Ansprüche 1 bis 13, **dadurch gekennzeichnet, dass** entweder das Verriegelungselement (1) oder das Gegenverriegelungselement (2) aufstelldachseitig angeordnet sind.
